# EUROPEAN PATENT APPLICATION

(11) **EP 2 269 473 A1**
(43) Date of publication of application: **05.01.2011**
(21) Application number: 08873536.0
(22) Date of filing: 29.12.2008
(51) Int. Cl.: A23L 1/238

(54) **REDUCED-SODIUM MOROMI SOY SAUCE**

(30) Priority: 26.03.2008 JP 2008081612
(71) Applicant: Kikkoman Corporation, Chiba 278-8601 (JP)
(72) Inventor: KOBAYASHI, Emi, Noda-shi Chiba 278-8601 (JP)
(74) Representative: Forstmeyer, Dietmar
(86) International application number: PCT/JP2008/073874
(87) International publication number: WO 2009/118970

(57) **Abstract**

[Problem to be solved by the Invention] Provided is a reduced-salt *moromi* soy sauce which is free from synthetic preservatives, shows a high microbial stability even after prolonged storage, and has a mild soy sauce flavor. In addition to these characteristics, this reduced-salt *moromi* soy sauce becomes homogeneous merely by being shaken lightly and gently with the hands after being filled into a container and sustains the homogeneous state for over about 3 hours, and also facilitates filling into packaging containers and small containers (for example, a tabletop soy sauce bottle) and pouring from these containers.

[Means for solving the Problem] The reduced-salt *moromi* soy sauce is produced by adding common salt, ethyl alcohol, water, etc., to a soy sauce *moromi* paste, which is obtained by finely granulating soy sauce *moromi* and removing impurities therefrom, and adjusting the common salt concentration of the reduced-salt *moromi* soy sauce to 6 to 10% (w/v), the ethyl alcohol concentration thereof to 4 to 7% (v/v), and the viscosity thereof to 0.1 to 0.8 Pa·s.

## Description

### Technical Field

The present invention relates to a reduced-salt *moromi* soy sauce that: is free from synthetic preservatives; shows a high microbial stability even after prolonged storage; has a mild soy sauce flavor; becomes homogeneous merely by being shaken lightly and gently with the hands after being filled into a container and sustains the homogeneous state for over about 3 hours; and also facilitates filling into packaging containers and small containers (for example, a tabletop soy sauce bottle) and pouring from these containers.

### Background Art

It has long been known that a soy sauce *moromi* paste can be obtained by finely granulating soy sauce *moromi* (mash composed of soybeans, wheat, seed starter, brine, etc.) and removing impurities therefrom (see, for example, Patent Literatures 1 to 8). However, soy sauce *moromi* pastes produced through these methods taste too salty as-is, and a mild soy sauce flavor cannot be expected therefrom.

As a countermeasure, one may consider adding water to the soy sauce *moromi* to reduce the salt content therein. However, soy sauce *moromi* has other disadvantages, such as that its storage stability is extremely poor compared to soy sauce. This is because its high content of soybean- and wheat-originating proteins and sugar and the catalytic effect of coexisting metal ions, such as iron ions, give rise to browning and spoilage and also deteriorate the aromatic flavor.

A conventional method proposed for overcoming the above disadvantage is to add a predetermined amount of ultraphosphate and/or metaphosphate to a liquid seasoning containing soy sauce *moromi* as a synthetic preservative (fungicide) (see, for example, Patent Literature 7). However, the use of synthetic preservatives cannot be regarded as sufficiently satisfactory in terms of safety of food products.

Also known is a method of producing a soy-sauce-like seasoning whose solid and liquid phases do not separate even after prolonged storage, the method involving finely granulating mechanically the solid contents of soy sauce *moromi* such that its viscosity becomes 3.0 Pa·s or above (see, for example, Patent Literature 3). However, the soy-sauce-like seasoning produced in this way will find great difficulty in filling into packaging containers and small containers (for example, a tabletop soy sauce bottle) and pouring from these containers.
Patent Literature 1: JP Patent Laid-Open Publication (kokai) No. 2001-54373
Patent Literature 2: JP Patent Laid-Open Publication (kokai) No. 3-143373
Patent Literature 3: JP Patent Examined Publication (kokoku) No. 57-59746
Patent Literature 4: JP Patent Laid-Open Publication (kokai) No. 5-115259
Patent Literature 5: JP Patent No. 3471635
Patent Literature 6: JP Patent Laid-Open Publication (kokai) No. 11-32718
Patent Literature 7: JP Patent Laid-Open Publication (kokai) No. 58-149656
Patent Literature 8: JP Patent Laid-Open Publication (kokai) No. 48-82095

### Disclosure of Invention

### Problem to be solved by the Invention

A problem to be solved by the present invention is to provide a reduced-salt *moromi* soy sauce that is free from synthetic preservatives, shows a high microbial stability even after prolonged storage, and has a mild soy sauce flavor, and that, in addition to these characteristics, becomes homogeneous merely by being shaken lightly and gently with the hands after being filled into a container and sustains the homogeneous state for over about 3 hours, and also facilitates filling into packaging containers and small containers (for example, a tabletop soy sauce bottle) and pouring from these containers.

### Means for solving Problem

Inventor has made diligent investigation to solve the above-mentioned problem and found that a reduced-salt *moromi* soy sauce which is free from synthetic preservatives, shows a high microbial stability even after prolonged storage, and has a mild soy sauce flavor, can be produced by: adding water or a saline solution to soy sauce *moromi* to adjust the common salt content to 6 to 10% (w/v); finely granulating the *moromi*; removing impurities therefrom; and adjusting the ethyl alcohol content to 4 to 7% (v/v). Further, Inventor has found that a product obtained by finely granulating soy sauce *moromi* and removing impurities therefrom, adding ethyl alcohol thereto, and homogenizing the mixture to a viscosity of 0.1 to 0.8 Pa·s has additional **characteristics in that** the product becomes homogeneous merely by being shaken lightly and gently with the hands after being filled into a container and sustains the homogeneous state for over about 3 hours, and also facilitates filling into packaging containers and small containers (for example, a tabletop soy sauce bottle) and pouring from these containers. The present invention has been achieved based on these findings, and relates to a reduced-salt *moromi* soy sauce as described below.

That is, a reduced-salt *moromi* soy sauce contains: 40 to 90% (v/v) of a soy sauce *moromi* paste which is obtained by finely granulating soy sauce *moromi* and removing impurities therefrom; 6 to 10% (w/v) of common salt; and 4 to 7% (v/v) of ethyl alcohol, and the same reduced-salt *moromi* soy sauce having a viscosity of 0.1 to 0.8 Pa·s.

### Advantageous Effects of Invention

The present invention can provide a reduced-salt *moromi* soy sauce that is free from synthetic preservatives, shows a high microbial stability even after prolonged storage, and has a mild soy sauce flavor, and that, in addition to these characteristics, becomes homogeneous merely by being shaken lightly and gently with the hands after being filled into a container and sustains the homogeneous state for over about 3 hours, and also facilitates filling into packaging containers and small containers (for example, a tabletop soy sauce bottle) and pouring from these containers.

### Best Mode for carrying out the Invention

Soy sauce *moromi* as used in the present invention may be any kind of soy sauce *moromi* obtained according to general soy sauce brewing methods, but *moromi* of *koikuchi* soy sauce (Japanese dark-color soy sauce) and *moromi* of *usukuchi* soy sauce (Japanese light-color soy sauce) are particularly preferable.

In the present invention, the expression "finely granulating and removing impurities" means to finely granulate or grind soy sauce *moromi* using a mixer or a pulper-finisher and to remove impurities in the soy sauce *moromi,* such as seed coats of soybeans and wheat, using a mesh having an opening size of 0.5 mm or less. Further, "soy sauce *moromi* paste" refers to soy sauce *moromi* which has been finely granulated and from which impurities have been removed, and "reduced-salt *moromi* soy sauce" refers to a product based on the soy sauce *moromi* paste whose common salt concentration and ethyl alcohol concentration have been adjusted.
Fine granulation and removal of impurities result in providing a soft and pleasant feel to the tongue, and especially, the use of a mesh having an opening size of 0.3 mm is preferable because it is possible to obtain a soy sauce *moromi* paste having an extremely smooth feel to the tongue and very good flowability.

In the present invention, it is important to adjust the common salt concentration of the reduced-salt *moromi* soy sauce to 6 to 10% (w/v). A common salt concentration of less than 6% (w/v) may be sensed as lacking saltiness; whereas a concentration exceeding 10% (w/v) may taste too salty and is thus not preferable. In contrast, a common salt concentration within the range of 6 to 10% (w/v) is preferable because of the mild soy sauce flavor.
Note that the common salt concentration of the reduced-salt *moromi* soy sauce is adjusted preferably by adding water, a saline solution, and/or an aqueous liquid seasoning (e.g. *sake, mirin* (sweet *sake*), wine, soup stock, or various extracts).

It is also important that the ethyl alcohol content is 4 to 7% (v/v). A content of less than 4% (v/v) is not preferable because of the deterioration in storage stability against microorganisms. In contrast, a content exceeding 7% (v/v) is also not preferable because of the possibility that the ethyl alcohol flavor will become too strong and the flavor of the reduced-salt *moromi* soy sauce will be impaired.

The solid content concentration and water content concentration in the soy sauce *moromi* paste are not particularly limited, but it is preferable that its Brix value ranges between 35 and 45.
In the reduced-salt *moromi* soy sauce of the present invention, the content of soy sauce *moromi* paste is from 40 to 90% (v/v), preferably 40 to 70% (v/v), and more preferably 55 to 65% (v/v).
The reduced-salt *moromi* soy sauce of the present invention may further contain, as appropriate, saccharides (sugars), alcohol beverages (e.g. *sake, mirin,* or wine), seasonings (e.g. soy sauce, vinegar, or sodium glutamate), extracts from food materials (e.g. *kombu* (edible kelp) extract, *katsuobushi* (dried skipjack tuna) extract, spice extracts, or various flavours), soup stock, or the like, as other components.

In the present invention, it is preferable to add a saccharide(s) because the soy sauce flavor becomes even milder.
The "saccharide" as used herein includes, for example, one or more from followings, fructose, glucose, etc. Also, other sweetening sugar solutions, such as honey, syrup, *mirin,* starch syrup, or corn syrup, may be used.
The saccharide/s is/are added in such an amount that the amount of reducing sugar in the reduced-salt *moromi* soy sauce preferably becomes 3 to 12% (w/v), and more preferably 6 to 10% (w/v), after addition.

In the present invention, it is also important to adjust the viscosity of the reduced-salt *moromi* soy sauce to 0.1 to 0.8 Pa·s. In cases where the viscosity of the reduced-salt *moromi* soy sauce is less than 0.1 Pa·s, the *moromi* soy sauce will become homogenous just by being shaken lightly and gently with the hands after being filled into a container, but will cause rapid syneresis before the lapse of 3 hours. On the other hand, a viscosity exceeding 0.8 Pa·s makes it difficult for the reduced-salt *moromi* soy sauce to be filled into packaging containers and small containers (for example, a tabletop soy sauce bottle) and poured from these containers, which impairs the usability and is thus not preferable.

In contrast, adjusting the viscosity of the reduced-salt *moromi* soy sauce to 0.1 to 0.8 Pa·s achieves various effects, such as that the *moromi* soy sauce becomes homogeneous merely by being shaken lightly and gently with the hands after being filled into a container and sustains the homogeneous state for over about 3 hours, and also facilitates filling into packaging containers and small containers (for example, a tabletop soy sauce bottle) and pouring from these containers.

The viscosity of the reduced-salt *moromi* soy sauce may be adjusted also by adding water, a saline solution, and/or an aqueous liquid seasoning (e.g. *sake, mirin,* wine, soup stock, or various extracts). The amount to be mixed is generally around 20 to 30% (v/v), and more preferably 22 to 28% (v/v).

Now, the present invention will be described in further detail according to Examples thereof.

Note that in the following Examples, the reducing sugar was determined according to the "Experimental Method of Soy Sauce" issued by Japan Soy Sauce Research Institute on March 1, 1985.
Further, the viscosity was determined by: placing 300 ml of a sample whose temperature was adjusted to 20°C into a glass beaker having an inner diameter of 78 mm, a height of 103 mm, and a capacity of 300 ml; and, with a B-type viscometer, submerging the lower end of a No. 2 rotor to a depth of approx. 6 cm below the surface of the sample; rotating the rotor at 30 rpm; and measuring the value after 2 minutes from the start of rotation.

### Example 1

### Production Example 1 of Reduced-Salt Moromi Soy Sauce:

To 100 parts by mass of matured *koikuchi* (dark-color) soy sauce *moromi* obtained according to a general soy sauce brewing method was added and mixed 25 parts by mass of a 20% saline solution. Then, using a pulper-finisher having an opening size of 0.3 mm, the mixture was finely granulated and its impurities were removed, to obtain a soy sauce *moromi* paste. Ethyl alcohol was added to the soy sauce *moromi* paste, to obtain a reduced-salt *moromi* soy sauce containing 8.6% (w/v) of common salt and 5% (v/v) of ethyl alcohol and having a viscosity of 0.2 Pa·s. This reduced-salt *moromi* soy sauce was found to show a high microbial stability without any degeneration or putrefaction, even after being left exposed to air for one month at room temperature. Further, it was found that this reduced-salt *moromi* soy sauce becomes homogeneous merely by being shaken lightly and gently with the hands after being filled into a container and sustains the homogeneous state for over about 3 hours and also facilitates filling into packaging containers and small containers (for example, a tabletop soy sauce bottle) and pouring from these containers.

### Example 2

### Production Example 2 of Reduced-Salt Moromi Soy Sauce:

To 100 parts by mass of matured *koikuchi* (dark-color) soy sauce *moromi* obtained according to a general soy sauce brewing method was added and mixed 25 parts by mass of a 20% saline solution. Then, using a pulper-finisher having an opening size of 0.3 mm, the mixture was finely granulated and its impurities were removed, to obtain a soy sauce *moromi* paste.

Then, additional ingredients were added to the soy sauce *moromi* paste according to the following formulation of ingredients and also ethyl alcohol was added, and the mixture was mixed and homogenized until uniform, to obtain a reduced-salt *moromi* soy sauce containing 8.6% (w/v) of common salt, 5% (v/v) of ethyl alcohol, and 8.7% (w/v) of reducing sugar, having a viscosity of 0.2 Pa·s, showing a high microbial stability even after prolonged storage, and having a mild soy sauce flavor.

| | |
|---|---|
| Formulation of Ingredients of Reduced-Salt *Moromi* Soy Sauce: | |
| Soy sauce *moromi* paste: | 60 ml |
| *Mirin*: | 10 ml |
| Sugar: | 3 g |
| Sodium glutamate: | 0.5 g |
| Common salt: | Amount necessary (amount providing final common salt content of 8.6% (w/v)) |
| Ethyl alcohol: | Amount necessary (amount providing final ethyl alcohol content of 5% (v/v)) |
| Water: The rest (amount required to make total volume of 100ml) | |
| Total: | 100 ml |

### Test for Confirming Homogeneity Effect:

To a 200-ml graduated cylinder was placed 200 ml of the reduced-salt *moromi* soy sauce obtained in Example 2 having a viscosity of 0.2 Pa·s, and the reduced-salt *moromi* soy sauce was left still for 3 hours at room temperature. No separation (syneresis) into a transparent layer and a precipitation layer was observed.

For comparison, the same test as above was conducted, except that in place of the reduced-salt *moromi* soy sauce of the present invention having a viscosity of 0.2 Pa·s, reduced-salt *moromi* soy sauces having respective viscosities of 0.08 Pa·s, 0.1 Pa·s, 0.8 Pa·s, and 0.9 Pa·s, and also a commercially-available soy sauce were used. The soy sauces were left still for 3 hours at room temperature to observe occurrence of syneresis.

The results are shown in Table 1.

### Test for Confirming Flowability Effect:

A 150-ml-capacity tabletop soy sauce bottle available from Kikkoman Corporation was prepared. The tabletop soy sauce bottle was composed of a main bottle body having the shape of a sake-decanter, and a stopper for closing the opening of the main bottle body. The stopper had a pouring hole (inner diameter: 4 mm) that passes through (communicates) the inside and outside of the bottle. To such a tabletop soy sauce bottle was placed 150 ml of the reduced-salt *moromi* soy sauce obtained in Example 2 having a viscosity of 0.2 Pa·s. The tabletop soy sauce bottle was tilted horizontally such that the pouring hole faced vertically downward.
The amount of liquid that poured out from the bottle in 30 seconds was 75 ml.

For comparison, the same test as above was conducted to measure the amount of pouring liquid, except that in place of the reduced-salt *moromi* soy sauce of the present invention having a viscosity of 0.2 Pa·s, reduced-salt *moromi* soy sauces having respective viscosities of 0.08 Pa·s, 0.1 Pa·s, 0.8 Pa·s, and 0.9 Pa·s, and also a commercially-available soy sauce were used. Note that the viscosity was adjusted by changing the blending amount of soy sauce *moromi* paste in the above-described formulation of ingredients of the reduced-salt *moromi* soy sauce.

The results are shown in Table 1.

**[Table 1]**

| No. | Type | Contents | Viscosity (Pa·s) | Occurrence of syneresis after being left still for 3 hours | Amount poured (m)/30 sec.) |
|---|---|---|---|---|---|
| 1 | Comparative Example 1 | Reduced-salt *moromi* soy sauce | 0.08 | Yes | 110 |
| 2 | Present Invention 1 | Reduced-salt *moromi* soy sauce | 0.1 | No | 105 |
| 3 | Present Invention 2 | Reduced-salt *moromi* soy sauce | 0.2 | No | 75 |
| 4 | Present Invention 3 | Reduced-salt *moromi* soy sauce | 0.8 | No | 45 |
| 5 | Comparative Example 2 | Reduced-salt *moromi* soy sauce | 0.9 | No | 18 |
| 6 | Control | Soy sauce | - | - | 130 |

Table 1 shows that Comparative Example 1 in which the viscosity of the reduced-salt *moromi* soy sauce is less than 0.1 Pa·s shows syneresis occurring within 3 hours. On the other hand, Comparative Example 2 in which the viscosity exceeds 0.8 Pa·s shows a sharp drop in the amount of liquid poured from the tabletop soy sauce bottle (18 ml), which makes pouring difficult. In contrast, by adjusting the viscosity of the reduced-salt *moromi* soy sauce to a range from 0.1 to 0.8 Pa·s, syneresis can be prevented for over about 3 hours, which provides a stable homogenous state, and also pouring from the tabletop soy sauce bottle can be facilitated.

## Claims

1. A reduced-salt *moromi* soy sauce containing: 40 to 90% (v/v) of a soy sauce *moromi* paste that is obtained by finely granulating soy sauce *moromi* and removing impurities therefrom; 6 to 10% (w/v) of common salt; and 4 to 7% (v/v) of ethyl alcohol, and the same reduced-salt *moromi* soy sauce having a viscosity of 0.1 to 0.8 Pa·s.

2. The reduced-salt *moromi* soy sauce according to claim 1, further containing a saccharide in such an amount that the amount of reducing sugar in the reduced-salt *moromi* soy sauce is 3 to 12% (w/v).
